# EUROPEAN PATENT APPLICATION

(11) **EP 1 568 721 A1**
(43) Date of publication of application: **31.08.2005**
(21) Application number: 03810642.3
(22) Date of filing: 07.11.2003
(51) Int. Cl.: C08F 220/22, C09D 133/16, C04B 41/64

(54) **TREATING AGENT FOR MASONRY**

(30) Priority: 08.11.2002 JP 2002324993
(71) Applicant: DAIKIN INDUSTRIES, LTD., Osaka 530-8323 (JP)
(72) Inventor: FUKUDA, Teruyuki, Yodogawa Works of Daikin In. Ltd, Settsu-shi, Osaka 566-8585 (JP); MAEDA, Masahiko, Yodogawa Works of Daikin In. Ltd., Settsu-shi, Osaka 566-8585 (JP)
(74) Representative: HOFFMANN EITLE
(86) International application number: PCT/JP2003/014184
(87) International publication number: WO 2004/041880

(57) **Abstract**

The application to a masonry of a fluorine-containing polymer comprising (1) a fluoroalkyl group-containing monomer, and (2) a silicon-containing monomer in the amount of 2.0 to 6.0 % by weight based on the polymer, can give a masonry having excellent water- and oil-repellency and soil resistance.

## Description

### Technical Field

The present invention relates to a polymer for treating a masonry and a method of treating a masonry. A masonry of the present invention has high water- and oil-repellency and soil resistance.

### Background Arts

It is studied that water and oil repellency and soil resistance are imparted by treating a surface of a masonry such as stone with a compound having a fluoroalkyl group (Rf group).

For example, JP-A-57-23662 describes that an acrylate having a Rf group is coated on a concrete and a stone to form a protective film. JP-A-11-077677 proposes that a stone is treated with a phosphate ester having a Rf group. JP-A-07-109317 discloses a treatment agent comprising a fluorine-containing polymer comprising a monomer having a Rf group, and 0.1 to 1.9 % by weight, based on the polymer, of a silicone-based vinyl monomer. These treatment agents, however, have sufficient oil repellency but insufficient water repellency, or sufficient water repellency but insufficient oil repellency.

### Disclosure of Invention

One of objects of the present invention is to provide a treatment agent which imparts both water repellency and oil repellency.

The other of objects of the present invention is to provide a polymer for treating a masonry, which is soluble in an organic solvent (particularly a petroleum solvent) having high flash point (for example, at least 65°C).

The present invention provides a fluorine-containing polymer for treating a masonry, comprising:
(1) a fluoroalkyl group-containing monomer, and
(2) a silicon-containing monomer in the amount of 2.0 to 6.0 % by weight based on the polymer.

The present invention provides also a composition for treating a masonry, comprising:
a fluorine-containing polymer which comprises
   (1) a fluoroalkyl group-containing monomer, and
   (2) a silicon-containing monomer in the amount of 2.0 to 6.0 % by weight based on the polymer, and
an organic solvent.

The present invention further provides a method of producing a treated masonry, which comprises applying said composition to a surface of a masonry, and then removing the solvent.

According to the present invention, a masonry having excellent water- and oil-repellency and soil resistance can be obtained.

### Mode for Carrying out Invention

The fluoroalkyl group-containing monomer is a compound having a fluoroalkyl group and a carbon-carbon double bond. Examples of the fluoroalkyl group-containing monomer are a (meth)acrylate monomer having a fluoroalkyl group, a maleate monomer having a fluoroalkyl group, and a fumarate monomer having a fluoroalkyl group. The fluoroalkyl group (Rf group ) is preferably, for example, a perfluoroalkyl group, particularly a perfluoroalkyl group having 1 to 21 carbon atoms, for example, 1 to 6 carbon atoms, especially 1 to 4 carbon atoms.

The fluoroalkyl group-containing (meth)acrylate monomer may be, for example, of the following formula:

Rf-A-OCOCR¹¹=CH₂

wherein Rf is a fluoroalkyl group having 1 to 21, for example, 1 to 6 carbon atoms, R¹¹ is hydrogen or a methyl group, and A is a divalent organic group.

In the above formula, A is a linear or branched alkylene group having 1 to 20 carbon atoms, a -SO₂ N(R²¹)R²²- group or a -CH₂CH(OR²³)CH₂-group (wherein R²¹ is an alkyl group having 1 to 10 carbon atoms, R²² is a linear or branched alkylene group having 1 to 10 carbon atoms, and R²³ is a hydrogen atom or acyl group having 1 to 10 carbon atoms).

Examples of the fluoroalkyl group-containing (meth)acrylate monomer inlcude the followings:

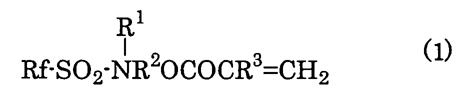

Rf-(CH₂)ₙOCOCR³=CH₂ (2)

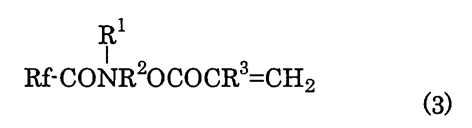

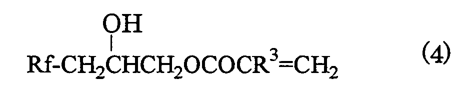

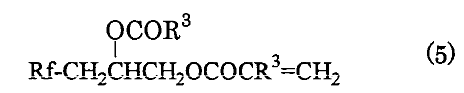

Rf-O-Ar-CH₂OCOCR³=CH₂ (6)

wherein Rf is a fluoroalkyl group having 1 to 21 carbon atoms (for example, C₄F₉-, C₈F₁₇-), R¹ is hydrogen or an alkyl group having 1 to 10 carbon atoms, R² is an alkylene group having 1 to 10 carbon atoms, R³ is hydrogen or a methyl group, Ar is an arylene group optionally having a substituent, and n is an integer of 1 to 10.

Specific examples of the fluoroalkyl group-containing (meth)acrylate monomer are as follows:

CF₃(CF₂)₃(CH₂)ₙOCOCCH=CH₂

CF₃(CF₂)₃(CH₂)ₙOCOC(CH₃)=CH₂

(CF₃)₂CFCF₂(CH₂)ₙOCOCCH=CH₂

(CF₃)₂CFCF₂(CH₂)ₙOCOC(CH₃)=CH₂

(CF₃)₃C(CH₂)ₙOCOCCH=CH₂

(CF₃)₃C(CH₂)ₙOCOC(CH₃)=CH₂

CF₃(CF₂)₇(CH₂)ₙOCOCCH=CH₂

CF₃(CF₂)₇(CH₂)ₙOCOC(CH₃)=CH₂

CF₃(CF₂)₆(CH₂)ₙOCOCH=CH₂

CF₃(CF₂)₈(CH₂)ₙOCOC(CH₃)=CH₂

(CF₃)₂CF(CF₂)₆(CH₂)ₙOCOCH=CH₂

(CF₃)₂CF(CF₂)₈(CH₂)ₙOCOCH=CH₂

(CF₃)₂CF(CF₂)₁₀(CH₂)ₙOCOCH=CH₂

(CF₃)₂CF(CF₂)₆(CH₂)ₙOCOC(CH₃)=CH₂

(CF₃)₂CF(CF₂)₈(CH₂)ₙOCOC(CH₃)=CH₂

(CF₃)₂CF(CF₂)₁₀(CH₂)ₙOCOC(CH₃)=CH₂

CF₃CF₂(CF₂)₆(CH₂)ₙOCOCH=CH₂

CF₃CF₂(CF₂)₈(CH₂)ₙOCOCH=CH₂

CF₃CF₂(CF₂)₁₀(CH₂)ₙOCOCH=CH₂

CF₃CF₂(CF₂)₆(CH₂)ₙOCOC(CH₃)=CH₂

CF₃CF₂(CF₂)₈(CH₂)ₙOCOC(CH₃)=CH₂

CF₃CF₂(CF₂)₁₀(CH₂)ₙOCOC(CH₃)=CH₂

CF₃(CF₂)₃SO₂N(CH₃)(CH₂)ₙOCOCH=CH₂

CF₃(CF₂)₃SO₂N(C₂H₅)(CH₂)ₙOCOCH=CH₂

(CF₃)₂CFCF₂SO₂N(CH₃)(CH₂)ₙOCOCH=CH₂

(CF₃)₂CFCF₂SO₂N(C₂H₅)(CH₂)ₙOCOCH=CH₂

(CF₃)₃CSO₂N(CH₃)(CH₂)ₙOCOCH=CH₂

(CF₃)₃CSO₂N(C₂H₅)(CH₂)ₙOCOCH=CH₂

CF₃(CF₂)₇SO₂N(CH₃)(CH₂)ₙOCOCH=CH₂

CF₃(CF₂)₇SO₂N(C₂H₅)(CH₂)ₙOCOCH=CH₂

CF₃(CF₂)₃CH₂CH(OCOCH₃)CH₂OCOC(CH₃)=CH₂

CF₃(CF₂)₃CH₂CH(OH)CH₂OCOCH=CH₂

(CF₃)₂CFCF₂CH₂CH(OCOCH₃)CH₂OCOC(CH₃)=CH₂

(CF₃)₂CFCF₂CH₂CH(OH)CH₂OCOCH=CH₂

(CF₃)₃CCH₂CH(OCOCH₃)CH₂OCOC(CH₃)=CH₂

(CF₃)₃CCH₂CH(OH)CH₂OCOCH=CH₂

(CF₃)₂CF(CF₂)₈CH₂CH(OCOCH₃)CH₂OCOC(CH₃)=CH₂

(CF₃)₂CF(CF₂)₆CH₂CH(OH)CH₂OCOCH=CH₂

[n=1 to 12, particularly 1 to 10]

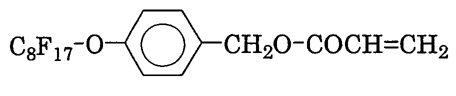

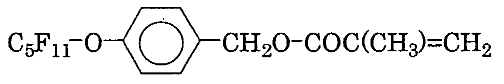

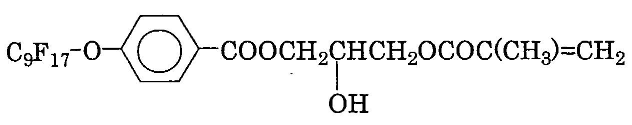

The amount of the fluoroalkyl group-containing monomer is generally from 50 to 98 % by weight, for example, from 60 to 80 % by weight, based on the polymer.

The the fluorine-containing polymer comprises the silicon-containing monomer.

The silicon-containing monomer is preferably a compound having a silane group (particularly terminal silane group) and a carbon-carbon double bond. The silicon-containing monomer may be a terminal silane coupling agent.

Specific examples of the silicon-containing monomer are as follows:

CH₂=CHCO₂(CH₂)₃Si(OCH₃)₃,

CH₂=CHCO₂(CH₂)₃Si(OC₂H₅)₃,

CH₂=C(CH₃)CO₂(CH₂)₃Si(OCH₃)₃

(γ-methacryloxypropyltrimethoxysilane),

CH₂=C(CH₃)CO₂(CH₂)₃Si(OC₂H₅)₃,

CH₂=CHCO₂(CH₂)₃SiCH₃(OC₂H₅)₂,

CH₂=C(CH₃)CO₂(CH₂)₃SiC₂H₅(OCH₃)₂,

CH₂=C(CH₃)CO₂(CH₂)₃Si(CH₃)₂(OC₂H₅),

CH₂=C(CH₃)CO₂(CH₂)₃Si(CH₃)₂OH,

CH₂=CHCO₂(CH₂)₃SiCH₃[ON(CH₃)C₂H₅]₂,

CH₂=C(CH₃)CO₂(CH₂)₃SiC₆H₅[ON(CH₃)C₂H₅]₂,

CH₂=CHSi(OCH₃)₃,

CH₂=CHSi(OC₂H₅)₃,

CH₂=CHSiCH₃(OCH₃)₂,

CH₂=CHSi(CH₃)₂(OC₂H₅),

CH₂=CHSi(CH₃)₂SiCH₃(OCH₃)₂,

CH₂=CHSiCH₃[ON(CH₃)C₂H₅]₂

vinyltrichlorosilane, and
vinyl tris(2-methoxyethoxy)silane.

The amount of the silicon-containing monomer is 2.0 to 6.0 % by weight, based on the fluorine-containing polymer. If less than 2 % by weight, the water- and oil-repellency is poor. If more than 6 % by weight, the oil repellency is poor. The upper limit of the amount of the silicon-containing monomer may be 4.0 % by weight, for example, 3.5 % by weight, particularly 3.0 % by weight. The lower limit of the amount of the silicon-containing monomer may be 2.5 % by weight.

The fluorine-containing polymer may contain an other monomer in addition to the fluoroalkyl group-containing monomer and the silicon-containing monomer. The other monomer may be a fluorine-free monomer.

The fluorine-free monomer may be a fluorine-free alkyl (meth)acrylate.

The fluorine-free alkyl (meth)acrylate is generally a monomer of the formula:

X¹-CX² =CH₂ (i)

wherein X is an alkyl carboxylate group (the number of carbon atoms in the alkyl group: 1 to 18), and X² is a hydrogen atom or a methyl group. The fluorine-containing polymer may not contain the fluorine-free alkyl (meth)acrylate.

The fluorine-containing polymer may contain other monomer other than fluorine-free monomer. Examples of the other monomer are Rf group-free monomers such as ethylene, vinyl chloride, vinylidene halide, styrene, acrylic acid and alkyl esters thereof, methacrylic acid and alkyl esters thereof, benzyl methacrylate, vinyl alkyl ketone, isoprene, chloroprene, maleic anhydride, butadiene, glycerol mono(meth)acrylate and glycidyl (meth)acrylate.

The amount of the other monomer may be from 0 to 100 parts by weight, for example, from 0 to 48 parts by weight, particularly from 1 to 40 parts by weight, based on 100 parts by weight of the fluoroalkyl group-containing monomer.

The fluorine-containing polymer can be prepared by any of conventional polymerization methods. The conditions of polymerization reaction can be arbitrarily selected. The polymerization procedure includes a bulk polymerization, a solution polymerization and an emulsion polymerization. The solution polymerization is generally preferable.

The molecular weight of the fluorine-containing polymer may be generally from 5,000 to 1,000,000 (for example, measured in GPC and in terms of polystyrene).

The treatment agent is in the form of a solution wherein the fluorine-containing polymer is dissolved in an organic solvent. The flash point of the organic solvent is preferably at least 65°C, for example, at least 70°C. The organic solvent may be an alcohol, an ester, a ketone or a halogenated hydrocarbon. The organic solvent may be a petroleum organic solvent.

In the treatment agent comprising the fluorine-containing polymer and the organic solvent, the concentration of the fluorine-containing polymer may be, for example, from 0.1 to 50 % by weight.

The treatment agent may contain an antifreezing agent, a viscosity-adjusting agent, an ultraviolet absorbing agent, an antioxidant, a pH adjuster, a defoaming agent, an antiseptic agent, a flame retardant, etc. according to necessity.

In the present invention, the treatment agent is applied to a substrate (masonry) to impart the water- and oil-repellency and the soil resistance to the substrate.

The substrate is masonry such as stone. Examples of the masonry include stone, brick, concrete and tile. Examples of stone include natural stone (for example, marble and granite), and artificial stone.

A method of treating the substrate is as follows. The treatment agent is applied to the substrate. The application can be can be performed by coating, dipping, brushing, etc. Then, the organic solvent is removed. The removal of the organic solvent can be performed by, for example, the drying. The drying can be performed at a temperature of, for example, 0 °C to 200 °C.

The application amount of the fluorine-containing polymer may be 0.05 to 50g, for example, 0.1 to 20g, especially 1 to 10g, per 1 m² of the surface area of the masonry.

The treatment agent can give the water-repellent oil-repellent performance to the masonry surface, since the treatment agent contains the fluorine-containing polymer. The adhesion of a soil to masonry can be prevented, even if the soil is an aqueous soil or is an oily soil.

### Preferable Embodiments of Invention

Although Examples of this invention are described below, these are only examples of this invention and this invention is not limited thereto. Hereinafter parts and % are parts by weight and % by weight, unless specified.

### Preparative Example 1

Into a 500 cc four-necked flask equipped with a stirrer, an inert gas inlet, a condenser and a thermometer, 26.0 g of CF₃CF₂(CF₂CF₂)ₙCH₂CH₂OCOCH=CH₂ (a mixture of compounds wherein n is 3 and 4 in a weight ratio of 86:14), 13.0 g of stearyl acrylate, 1.0 g of γ-methacryloxypropyltrimethoxysilane (SZ6030 manufactured by Dow Corning Toray Co., Ltd.) and 120 g of butyl acetate were charged and heated to 70°C. 0.3 Grams of azobisisobutyronitrile was added and the polymerization reaction was conducted with stirring at 70°C for at least 12 hours. A gas chromatography revealed that a polymerization reaction conversion was at least 97%. The concentration of the polymer solution was adjusted to 25% with butyl acetate to give a solution of the polymer in butyl acetate.

### Comparative Preparative Example 1

Into the similar flask as in Preparative Example 1, 26.0 g of CF₃CF₂(CF₂CF₂)ₙCH₂CH₂OCOCH=CH₂ (a mixture of compounds wherein n is 3 and 4 in a weight ratio of 86:14), 14.0 g of stearyl acrylate and 120 g of butyl acetate were charged and heated to 70°C. 0.3 Grams of azobisisobutyronitrile was added and the polymerization reaction was conducted with stirring at 70°C for at least 12 hours. A gas chromatography revealed that a polymerization reaction conversion was at least 97%. The concentration of the polymer solution was adjusted to 25% with butyl acetate to give a solution of the polymer in butyl acetate.

### Comparative Preparative Example 2

Into the similar flask as in Preparative Example 1, 26.0 g of CF₃CF₂(CF₂CF₂)ₙCH₂CH₂OCOCH=CH₂ (a mixture of compounds wherein n is 3 and 4 in a weight ratio of 86:14), 12.0 g of stearyl acrylate, 2.0 g of γ-methacryloxypropyltrimethoxysilane (SZ6030 manufactured by Dow Corning Toray Co., Ltd.) and 120 g of butyl acetate were charged and heated to 70°C. 0.3 Grams of azobisisobutyronitrile was added and the polymerization reaction was conducted with stirring at 70°C for at least 12 hours. A gas chromatography revealed that a polymerization reaction conversion was at least 97%. The concentration of the polymer solution was adjusted to 25% with butyl acetate to give a solution of the polymer in butyl acetate.

### Example 1

Each of the polymer prepared in Preparative Example 1, a commercially available solvent-type fluorine-containing water- and oil-repellent agent, UNIDYNE TG-652 (manufactured by Daikin Industries, Co. Ltd.) and FORAPERLE 225 (manufactured by Atofina) was diluted with mineral spirit to give a treatment liquid having the solid content of 3%.

A surface of each of polished natural granite (mined in China, and purchased from Nittai Kogyo Kabushiki-Kaisha) and limestone (purchased from Inax Corp.) was coated with the treatment liquid (1 mL of the treatment liquid was applied to an area of 5 cm x 10 cm). After left at room temperature for 10 minutes, a superfluous treatment liquid was wiped off. After left at room temperature for 24 hours, the following soil resistance test was conducted.

### Soil resistance test method

A soil was put on an untreated or treatment agent-treated substrate, and droplets were left for 24 hours and wiped off with a paper towel. The evaluation was conducted according to the following criteria.
- 0 :: Deep stain, and broad oil droplet spread
- 1 :: Deep stain, and medium oil droplet spread
- 2 :: Deep stain, and slight or no oil droplet spread
- 3 :: Medium stain, and no spread
- 4:: Slight stain
- 5:: No stain.

The results are shown in Table 1 (granite) and Table 2 (limestone).

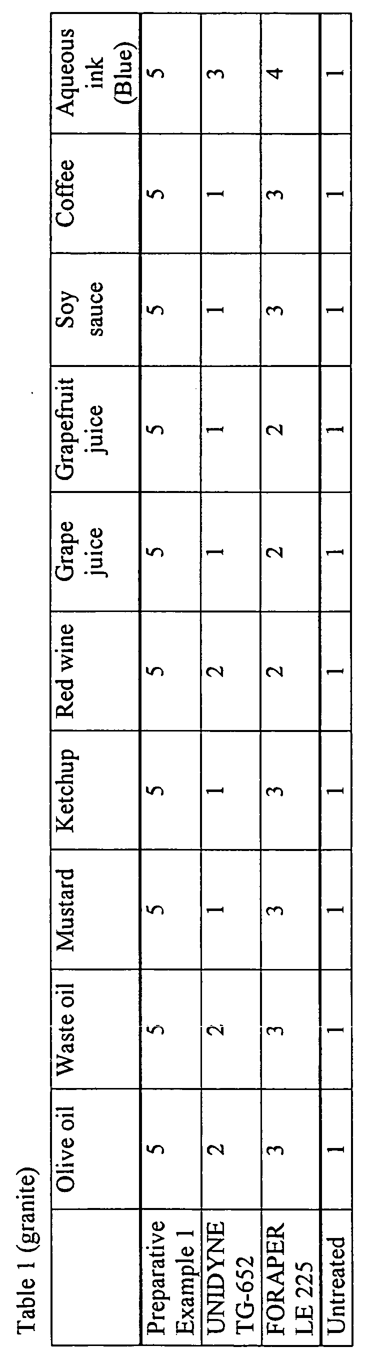

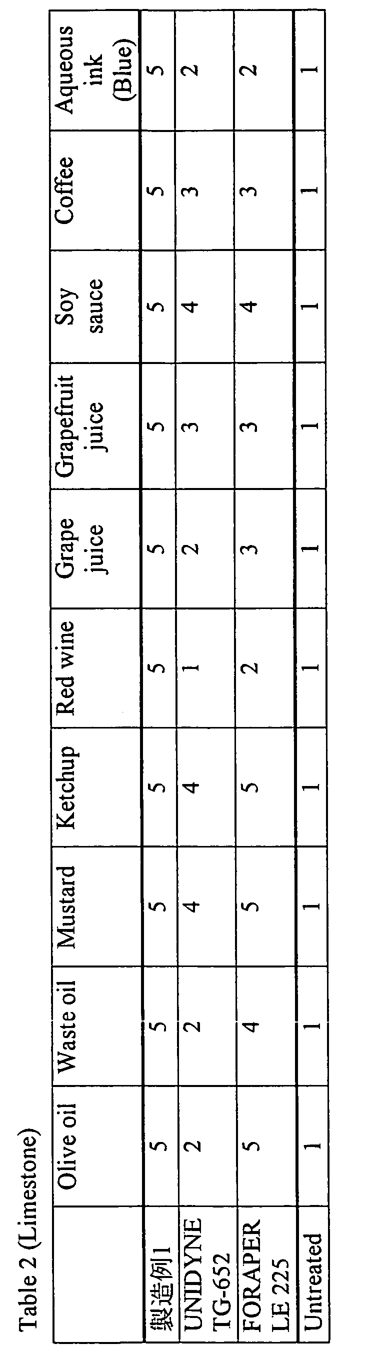

### Example 2

Each of the polymers obtained in Preparative Example 1, and Comparative Examples 1 and 2, UNIDYNE TG-652 (manufactured by Daikin Industries, Co., Ltd.) and FORAPERLE 225 (manufactured by Atofina) was diluted with mineral spirit to give a treatment liquid having the solid content of 3%.

A surface of each of polished natural granite (mined in China, and purchased from Nittai Kogyo Kabushiki-Kaisha) and limestone (purchased from Inax Corp.) was coated with the treatment liquid (1 mL of the treatment liquid was applied to an area of 5 cm x 10 cm). After left at room temperature for 10 minutes, a superfluous treatment liquid was wiped off. After left at room temperature for 24 hours, the same soil resistance test as in Example 1 was conducted.

The results are shown in Table 3 (granite) and Table 4 (limestone).

**Table 3**

| (granite) | | | | |
|---|---|---|---|---|
| | Olive Oil | Waste oil | Red wine | Coffee |
| Preparative Example 1 | 5 | 5 | 5 | 5 |
| Comparative Preparative Example 1 | 4 | 4 | 3 | 4 |
| Comparative Preparative Example 2 | 2 | 2 | 5 | 5 |
| UNIDYNE TG-652 | 2 | 2 | 2 | 1 |
| FORAPERLE 225 | 3 | 3 | 2 | 3 |
| Untreated | 1 | 1 | 1 | 1 |

**Table 4**

| (limestone) | | | | |
|---|---|---|---|---|
| | Olive Oil | Waste oil | Red wine | Coffee |
| Preparative Example 1 | 5 | 5 | 5 | 5 |
| Comparative Preparative Example 1 | 3 | 4 | 3 | 3 |
| Comparative Preparative Example 2 | 3 | 3 | 5 | 5 |
| UNIDYNE TG-652 | 2 | 2 | 1 | 3 |
| FORAPERLE 225 | 5 | 4 | 2 | 3 |
| Untreated | 1 | 1 | 1 | 1 |

### Example 3

Each of the polymer obtained in Preparative Example 1, UNIDYNE TG-652 (manufactured by Daikin Industries, Co., Ltd.) and FORAPERLE 225 (manufactured by Atofina) was diluted with a petroleum solvent (Shellsol D70) having a flash point of 73°C to give a treatment liquid having the solid content of 3%.

A surface of each of polished natural granite (mined in China, and purchased from Nittai Kogyo Kabushiki-Kaisha) and limestone (purchased from Inax Corp.) was coated with the treatment liquid (1 mL of the treatment liquid was applied to an area of 5 cm x 10 cm). After left at room temperature for 10 minutes, a superfluous treatment liquid was wiped off. After left at room temperature for 24 hours, the same soil resistance test as in Example 1 was conducted.

The results are shown in Table 5.

| | Olive oil | Waste oil | Red wine | Coffee |
|---|---|---|---|---|
| Preparative Example 1 | 4 | 5 | 5 | 5 |
| UNIDYNE TG-652 | 1 | 1 | 1 | 1 |
| FORAPERLE 225 | 1 | 1 | 2 | 2 |
| Untreated | 1 | 1 | 1 | 1 |

## Claims

1. A fluorine-containing polymer for treating a masonry, comprising:
(1) a fluoroalkyl group-containing monomer, and
(2) a silicon-containing monomer in the amount of 2.0 to 6.0 % by weight based on the polymer.

2. The fluorine-containing polymer according to claim 1, wherein the silicon-containing monomer is a compound having a silane group and a carbon-carbon double bond.

3. A composition for treating a masonry, comprising:
a fluorine-containing polymer which comprises
(1) a fluoroalkyl group-containing monomer, and
(2) a silicon-containing monomer in the amount of 2.0 to 6.0 % by weight based on the polymer, and
an organic solvent.

4. A method of producing a treated masonry, which comprises applying, to a surface of a masonry, a composition comprising:
a fluorine-containing polymer which comprises
(1) a fluoroalkyl group-containing monomer, and
(2) a silicon-containing monomer in the amount of 2.0 to 6.0 % by weight based on the polymer, and
an organic solvent, and then
removing the solvent.

5. A masonry produced by the method according to claim 4.
